# EUROPÄISCHE PATENTANMELDUNG

(11) **EP 3 037 396 A1**
(43) Veröffentlichungstag der Anmeldung: **29.06.2016**
(21) Anmeldenummer: 15161730.5
(22) Anmeldetag: 30.03.2015
(51) Int. Cl.: C05B 17/00, C05D 9/00, C02F 101/20

(54) **VERFAHREN ZUR HERSTELLUNG EINES PHOSPHATHALTIGEN DÜNGEMITTELS AUS KLÄRSCHLAMM- ODER ABFALLVERGÄRUNGSASCHEN**

(30) Priorität: 22.12.2014 EP 14199848
(71) Anmelder: TSP GmbH, 70794 Filderstadt-Bernhausen (DE)
(72) Erfinder: Bux, Markus, 72124 Pliezhausen (DE); Ritterbusch, Steffen, 70563 Stuttgart (DE); Conrad, Tilo, 72622 Nürtingen (DE)
(74) Vertreter: Dr. Gassner & Partner mbB

(57) **Zusammenfassung**

Die Erfindung betrifft ein Verfahren zur Herstellung eines phosphathaltigen Düngemittels aus einer Asche oder einem Verkohlungsrückstand eines Schlamms aus einer Abwasserreinigung oder Abfallvergärung durch

a) Vermischen der Asche oder des Verkohlungsrückstands mit einer mineralischen Säure und Inkubation der resultierenden Suspension in einem ersten Gefäß,
b) Absondern von feuchten Feststoffen aus der Suspension und Ersetzen der abgesonderten Feststoffe durch weitere Asche oder weiteren Verkohlungsrückstand, Vermischen der weiteren Asche oder des weiteren Verkohlungsrückstands mit der in dem ersten Gefäß verbleibenden mineralischen Säure und Inkubation der resultierenden Suspension in dem ersten Gefäß,
c) Überführen dieser Feststoffe in ein zweites Gefäß und Vermischen der Feststoffe mit einer pH-neutralen, basischen oder gepufferten wässrigen Flüssigkeit,
d) Absondern eines Teils der durch das Vermischen entstandenen Flüssigkeit aus dem zweiten Gefäß, Abtrennen darin enthaltener Schwermetallionen und Rückführen dieser Flüssigkeit in das zweite Gefäß,
e) Absondern von feuchten Feststoffen aus der im zweiten Gefäß enthaltenen Flüssigkeit und
f) Wiederholen der Schritte b) bis f).

## Beschreibung

Die Erfindung betrifft ein Verfahren zur Herstellung eines phosphathaltigen Düngemittels aus einer Asche oder einem Verkohlungsrückstand eines Schlamms aus einer Abwasserreinigung oder Abfallvergärung.

Aus der DE 102 43 840 A1 ist ein Verfahren zur Abtrennung von umweltrelevanten Schwermetallen aus Klärschlammasche bekannt. Dabei werden umweltverträgliche Metallchloride in die Asche gemischt. Anschließend folgt eine Erwärmung der Mischung über den Siedepunkt der sich bildenden Chloride der umweltrelevanten Schwermetalle, so dass aus der Mischung gasförmige Schwermetallchloride austreten, welche getrennt aufgefangen werden. Als umweltverträgliche Metallchloride werden vorzugsweise solche verwendet, deren Metalle für Pflanzen verfügbare Phosphate bilden. Dafür sind Alkali- oder Erdalkalichloride, insbesondere Kalium- und Magnesiumchlorid, geeignet. Die Erwärmung der Mischung erfolgt zweckmäßig auf eine Temperatur im Bereich von 1.000 °C bis 1.100 °C. Damit ist das Verfahren verhältnismäßig energieaufwändig.

Aus der DE 10 2004 059 935 A1 ist ein Verfahren zum Abtrennung von Schwermetallen aus phosphorhaltiger Klärschlammasche bekannt. Dabei wird diese auf eine Temperatur oberhalb der Siedepunkte der Oxichloride oder Chloride der zu entfernenden Schwermetalle erwärmt. Die so erwärmte Klärschlammasche wird mit einer Chlorgas enthaltenden Atmosphäre in Kontakt gebracht und die sich bildenden gasförmigen Oxichloride oder Chloride der Schwermetalle werden getrennt aufgefangen und somit von der Asche separiert. Das Verfahren ist aufwändig, da zur sicheren Handhabung der Chlorgasatmosphäre ein hoher Sicherheitsaufwand erforderlich ist.

Aus der DE 10 2010 034 042 B4 ist ein Verfahren zur Herstellung von Phosphat- und Mehrnährstoff-Düngemitteln bekannt. Dabei wird die aus einer Monoverbrennung von kommunalen Klärschlämmen gewonnene Asche mit Orthophosphorsäure umgesetzt, um ein Kalziumdihydrogenphosphat mit einer Pflanzenverfügbarkeit von mehr als 80% Wasserlöslichkeit zu erhalten. In der Asche enthaltene Schwermetalle verbleiben in den sich ergebenden Düngemitteln.

Weiterhin ist es aus KA Korrespondenz Abwasser, Abfall, 2013 (60), Nr. 10, Seiten 837 bis 844 bekannt, Klärschlammasche nasschemisch mittels Säure oder Lauge aufzuschließen und das dabei in Lösung gegangene Phosphor mittels Kalzium- oder Magnesiumsalzen als Kalziumphosphat oder Magnesiumphosphat zu fällen. Das entstandene Phosphat wird nach der Fällung von der verbleibenden Lösung abgetrennt. Es verbleiben ein phosphatarmer Ascheschlamm und ein Abwasser mit hohem Schwermetallgehalt. Beide Rückstände müssen entsorgt werden.

Aufgabe der vorliegenden Erfindung ist es, ein Verfahren anzugeben, bei welchem mit verhältnismäßig geringem Aufwand ein phosphathaltiges Düngemittel aus einer Asche oder einem Verkohlungsrückstand eines Schlamms aus einer Abwasserreinigung oder Abfallvergärung gewonnen werden kann, welches gegenüber der eingesetzten Asche oder dem eingesetzten Verkohlungsrückstand einen deutlich verminderten Schwermetallgehalt aufweist.

Die Aufgabe wird durch die Merkmale des Patentanspruchs 1 gelöst. Zweckmäßige Ausgestaltungen der Erfindung ergeben sich aus den Merkmalen der Patentansprüche 2 bis 11.

Erfindungsgemäß ist ein Verfahren zur Herstellung eines phosphathaltigen Düngemittels aus einer Asche oder einem Verkohlungsrückstand eines Schlamms aus einer Abwasserreinigung oder Abfallvergärung mit folgenden Schritten vorgesehen:
a) Vermischen der Asche oder des Verkohlungsrückstands mit einer mineralischen Säure und Inkubation der resultierenden Suspension in einem ersten Gefäß,
b) Absondern von feuchten Feststoffen aus der Suspension und Ersetzen der abgesonderten Feststoffe durch weitere Asche oder weiteren Verkohlungsrückstand, Vermischen der weiteren Asche oder des weiteren Verkohlungsrückstands mit der in dem ersten Gefäß verbleibenden mineralischen Säure und Inkubation der resultierenden Suspension in dem ersten Gefäß,
c) Überführen dieser Feststoffe in ein zweites Gefäß und Vermischen der Feststoffe mit einer pH-neutralen, basischen oder gepufferten wässrigen Flüssigkeit,
d) Absondern eines Teils der durch das Vermischen entstandenen Flüssigkeit aus dem zweiten Gefäß, Abtrennen darin enthaltener Schwermetallionen und Rückführen dieser Flüssigkeit in das zweite Gefäß,
e) Absondern von feuchten Feststoffen aus der im zweiten Gefäß enthaltenen Flüssigkeit und
f) Wiederholen der Schritte b) bis f).

Die Inkubation gemäß Schritt a) kann über einen Zeitraum im Bereich von 2 bis 30 Minuten erfolgen. Sowohl die mineralische Säure bei Schritt a) als auch die wässrige Flüssigkeit bei Schritt c) kann eine Temperatur im Bereich von 15 bis 25 °C aufweisen. Durch das Vermischen gemäß Schritt a) und das Vermischen gemäß Schritt c) kann eine Temperaturerhöhung, z. B. auf eine Temperatur im Bereich von 20 bis 50 °C erfolgen.

Bei den Feststoffen handelt es sich um die aufgeschlossene Asche oder den aufgeschlossenen Verkohlungsrückstand. Das Vermischen der Feststoffe mit der neutralen, basischen oder gepufferten wässrigen Flüssigkeit kann in dem zweiten Gefäß erfolgen, indem die Flüssigkeit dort bereits vorgelegt wird bevor die Feststoffe dazugegeben werden oder indem die Flüssigkeit danach dazugegeben wird.

Die Feststoffe können aber auch mit der Flüssigkeit vermischt und zusammen mit der Flüssigkeit in das zweite Gefäß gespült werden. Das Wiederholen der Schritte b) bis f) kann auch simultan erfolgen, d. h. es ist z. B. möglich, dass während des Absonderns gemäß Schritt b) gleichzeitig das Absondern gemäß der Schritte d) und e) erfolgt. Zum Absondern der Flüssigkeit gemäß Schritt d) kann in dem zweiten Gefäß ein Filter vorgesehen sein, so dass nur die Flüssigkeit nicht aber die darin suspendierten Feststoffe abgesondert werden.

Die Besonderheit des erfindungsgemäßen Verfahrens besteht darin, dass die mineralische Säure in dem ersten Gefäß zu Beginn des Verfahrens zwar Schwermetallionen und Phosphat aufnimmt, im Laufe des Verfahrens aber zunehmend mit Phosphat und Schwermetallionen gesättigt wird. Dadurch gehen dann kein weiteres Phosphat und keine weiteren Schwermetallionen aus der Asche oder dem Verkohlungsrückstand in der Säure in Lösung. Die gesättigte mineralische Säure verbleibt im Wesentlichen im ersten Gefäß. Nur die durch die Feuchtigkeit der Feststoffe in das zweite Gefäß verschleppte Säure geht verloren. Dadurch ist der Säureverbrauch verhältnismäßig gering und das Phosphat bleibt in dem feuchten Feststoff erhalten, der dadurch ein wertvoller Dünger wird.

Neben den als Dünger verwendbaren aus dem zweiten Gefäß abgesonderten Feststoffen sowie der aufkonzentrierten abgeschiedenen Schwermetallfracht entstehen keine zusätzlich zu entsorgenden Abfälle. Die Asche oder der Verkohlungsrückstand wird nahezu vollständig in ein Düngemittel überführt. Dadurch bleiben auch andere neben dem Phosphat in der Asche oder dem Verkohlungsrückstand enthaltene landwirtschaftlich nutzbare Inhaltsstoffe wie Schwefel, Kalium, Calcium oder Spurenstoffe erhalten und können genutzt werden. Das Verfahren ist dadurch wirtschaftlich sehr vorteilhaft.

Die mineralische Säure kann Schwefelsäure, Phosphorsäure oder Salpetersäure umfassen, aus einer dieser Säuren zumindest im Wesentlichen bestehen oder ein Gemisch aus mindestens zwei dieser Säuren sein. Es handelt sich im Allgemeinen um eine 20-70%-ige Säure. Eine solche Säurekonzentration hat den Vorteil, dass darin gelöste Schwermetallionen in Lösung bleiben und nicht ausfallen.

Der pH-Wert der wässrigen Flüssigkeit bei Schritt c) kann so gewählt werden, dass der sich durch Überführen der Feststoffe einstellende pH-Wert im zweiten Gefäß für ein zum Abtrennen der Schwermetallionen gewähltes Verfahren günstig ist. Für ein Abtrennen mittels Ionenaustauscher kann z. B. ein sich einstellender neutraler pH-Wert und für ein Abtrennen mittels Aktivkohle ein sich einstellender saurer pH-Wert günstig sein.

Bei der pH-neutralen wässrigen Flüssigkeit kann es sich um Wasser handeln. Die basische Flüssigkeit kann eine Lösung von Ammoniumionen und/oder Hydroxidionen in Wasser sein. Die gepufferte wässrige Flüssigkeit kann ein Phosphatpuffer, wie z. B. PBS, sein. Der pH-neutralen Flüssigkeit kann bei oder nach dem Vermischen gemäß Schritt c) auch ein alkalischer Feststoff, wie z. B. KOH oder NaOH, zugesetzt werden. Die Menge der basischen Flüssigkeit oder des alkalischen Feststoffs kann dabei so bemessen werden, dass die resultierende Flüssigkeit zumindest im Wesentlichen pH-neutral ist, d. h. einen pH-Wert im Bereich von 6 bis 8 aufweist.

Das Absondern und/oder das Rückführen gemäß Schritt d) kann kontinuierlich oder intermittierend erfolgen. Das Abtrennen der Schwermetallionen kann mittels eines Ionenaustauschers, Aktivkohle, Bakterien, Pilzen, Algen, einer Biomasse aus Bakterien, Pilzen oder Algen, eines Fällungsmittels und/oder eines Nanofilters und/oder elektrolytisch erfolgen. Bei dem Ionenaustauscher handelt es sich im Allgemeinen um ein lonenaustauscherharz. Bei den Pilzen kann es sich um Hefen handeln. Die Biomasse aus Bakterien, Pilzen und/oder Algen bzw. die aus Bakterien, Pilzen und/oder Algen gewonnene Biomasse kann in immobilisierter Form vorliegen. Eine Immobilisierung dieser Biomasse und eine Biosorption von Schwermetallionen an Bakterien, Pilzen oder Algen bzw. der Biomasse aus Bakterien, Pilzen und/oder Algen sind im Stand der Technik bekannt.

Das Abtrennen der Schwermetallionen kann selektiv erfolgen. Dadurch werden nur oder vor allem Schwermetallionen abgeschieden während andere in der Flüssigkeit aus dem zweiten Gefäß enthaltene Stoffe in Lösung bleiben. Dies kann z. B. durch eine fraktionierte Fällung oder mittels selektiv wirksamen Ionenaustauschern, die beispielsweise Kationen bevorzugt binden, oder mittels dotierter Aktivkohle, die mit aktiven Gruppen mit spezifischen Bindungseigenschaften dotiert ist, erreicht werden. Derartige Verfahren sind im Stand der Technik bekannt.

Die gemäß Schritt e) abgesonderten feuchten Feststoffe können komprimiert, getrocknet, piliert, erwärmt und/oder mit Kalk oder gebranntem Kalk oder einem weiteren Stoff vermischt werden. Beim Pilieren wird der Feststoff zu Krümeln oder Kügelchen geformt. Dazu geeignete Werkzeuge sind im Stand der Technik bekannt.

Bei einer Ausgestaltung des Verfahrens wird/werden die Suspension im ersten Gefäß und/oder die durch das Vermischen im zweiten Gefäß entstandene Flüssigkeit kontinuierlich oder intermittierend gerührt. Dazu kann/können im ersten Gefäß und/oder im zweiten Gefäß jeweils eine Mischvorrichtung, insbesondere ein Rührer, enthalten sein.

Die bei dem Verfahren eingesetzte Asche oder der bei dem Verfahren eingesetzte Verkohlungsrückstand kann aus Klärschlamm durch Vergasung und/oder Pyrolyse oder durch Verbrennung gewonnene(r) Asche (= Klärschlammasche) oder Verkohlungsrückstand sein.

Nachfolgend wird die Erfindung anhand eines Ausführungsbeispiels und einer Figur erläutert.

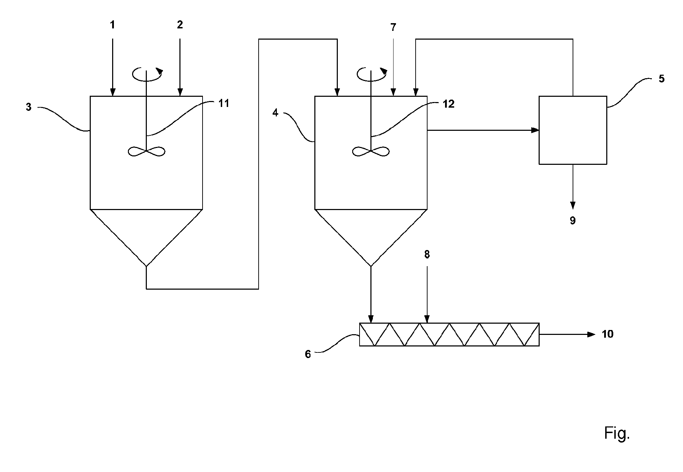

Die Figur zeigt eine schematische Darstellung des erfindungsgemäßen Verfahrens.

In dem ersten Gefäß 3 wird zunächst eine 50%-ige mineralische Säure 2 in Form einer Salpetersäure vorgelegt und durch den Rührer 11 gerührt. Anschließend wird Klärschlammasche 1 zugesetzt. Nach einer Inkubationszeit von etwa 15 Minuten bei einer sich einstellenden Temperatur im Bereich von 20 bis 50 °C wird ein feuchter Feststoff aus der resultierenden Suspension abgesondert und in das zweite Gefäß 4 überführt. In dem zweiten Gefäß 4 ist Wasser oder eine Pufferlösung 7 enthalten. Durch die Pufferlösung 7 kann der pH-Wert im Bereich von 7 ± 1 gehalten werden.

Durch den weiteren Rührer 12 werden die Feststoffe mit der Pufferlösung 7 gemischt. Aus dem zweiten Gefäß 4 wird kontinuierlich Flüssigkeit abgesondert, durch einen Schwermetallionenabscheider 5 geführt und wieder in das zweite Gefäß 4 zurückgeführt. In dem Schwermetallionenabscheider 5 ist ein lonenaustauscherharz enthalten, welches Kationen aus der Flüssigkeit bindet. Sobald die Aufnahmekapazität des lonenaustauscherharzes erschöpft ist, kann der Flüssigkeitsstrom aus dem zweiten Gefäß gestoppt und das lonenaustauscherharz zur Regeneration mit einer hier nicht dargestellten konzentrierten Salzlösung oder konzentrierten Säure und anschließend wieder mit einer pH-neutralen oder salzfreien oder zumindest salzarmen Flüssigkeit, wie z. B. entionisiertem Wasser, gespült werden. Dabei wird aus dem Schwermetallionenabscheider 5 eine konzentrierte Schwermetallionenlösung 9 ausgeschieden. Nach Regeneration ist der Ionenaustauscher wieder zur Aufnahme von Schwermetallionen bereit, so dass die aus dem zweiten Gefäß 4 abgesonderte Flüssigkeit wieder durch den Schwermetallionenabscheider 5 geführt werden kann.

Aus dem zweiten Gefäß 4 wird der darin enthaltene feuchte Feststoff abgeschieden und in einer Konditioniereinheit 6, beispielsweise durch Zugabe von gebranntem Kalk 8, aufbereitet. Durch die Zugabe von gebranntem Kalk 8 entsteht Wärme, die ggf. bereits zur Trocknen der entstandenen Mischung ausreichend ist. Ggf. kann zur Trocknung weitere Wärme zugeführt werden. Durch bewegliche Werkzeuge in der Konditioniereinheit 6 wird die entstandene Mischung pilliert und kann dann als Dünger 10 direkt in der Landwirtschaft verwendet werden.

## Patentansprüche

1. Verfahren zur Herstellung eines phosphathaltigen Düngemittels aus einer Asche oder einem Verkohlungsrückstand eines Schlamms aus einer Abwasserreinigung oder Abfallvergärung mit folgenden Schritten:
a) Vermischen der Asche oder des Verkohlungsrückstands mit einer mineralischen Säure und Inkubation der resultierenden Suspension in einem ersten Gefäß,
b) Absondern von feuchten Feststoffen aus der Suspension und Ersetzen der abgesonderten Feststoffe durch weitere Asche oder weiteren Verkohlungsrückstand, Vermischen der weiteren Asche oder des weiteren Verkohlungsrückstands mit der in dem ersten Gefäß verbleibenden mineralischen Säure und Inkubation der resultierenden Suspension in dem ersten Gefäß,
c) Überführen dieser Feststoffe in ein zweites Gefäß und Vermischen der Feststoffe mit einer pH-neutralen, basischen oder gepufferten wässrigen Flüssigkeit,
d) Absondern eines Teils der durch das Vermischen entstandenen Flüssigkeit aus dem zweiten Gefäß, Abtrennen darin enthaltener Schwermetallionen und Rückführen dieser Flüssigkeit in das zweite Gefäß,
e) Absondern von feuchten Feststoffen aus der im zweiten Gefäß enthaltenen Flüssigkeit und
f) Wiederholen der Schritte b) bis f).

2. Verfahren nach Anspruch 1, wobei die mineralische Säure Schwefelsäure, Phosphorsäure oder Salpetersäure umfasst, aus einer dieser Säuren zumindest im Wesentlichen besteht oder ein Gemisch aus mindestens zwei dieser Säuren ist.

3. Verfahren nach einem der vorhergehenden Ansprüche, wobei die pH- neutrale wässrige Flüssigkeit Wasser, die basische wässrige Flüssigkeit eine Lösung von Ammoniumionen und/oder Hydroxidionen in Wasser und die gepufferte wässrige Flüssigkeit ein Phosphatpuffer ist.

4. Verfahren nach einem der vorhergehenden Ansprüche, wobei der pH- neutralen Flüssigkeit bei oder nach dem Vermischen gemäß Schritt c) ein alkalischer Feststoff zugesetzt wird.

5. Verfahren nach einem der vorhergehenden Ansprüche, wobei die Menge der basischen Flüssigkeit oder des alkalischen Feststoffs so bemessen wird, dass die resultierende Flüssigkeit zumindest im Wesentlichen neutral ist.

6. Verfahren nach einem der vorhergehenden Ansprüche, wobei das Absondern und/oder das Rückführen gemäß Schritt d) kontinuierlich oder intermittierend erfolgt.

7. Verfahren nach einem der vorhergehenden Ansprüche, wobei das Abtrennen der Schwermetallionen mittels eines Ionenaustauschers, Aktivkohle, Bakterien, Pilzen, Algen, einer Biomasse aus Bakterien, Pilzen und/oder Algen, eines Fällungsmittels und/oder eines Nanofilter und/oder elektrolytisch erfolgt.

8. Verfahren nach einem der vorhergehenden Ansprüche, wobei das Abtrennen der Schwermetallionen selektiv erfolgt.

9. Verfahren nach einem der vorhergehenden Ansprüche, wobei die gemäß Schritt e) abgesonderten feuchten Feststoffe komprimiert, getrocknet, pilliert, erwärmt und/oder mit Kalk oder gebranntem Kalk oder einem weiteren Stoff vermischt werden.

10. Verfahren nach einem der vorhergehenden Ansprüche, wobei die Suspension im ersten Gefäß und/oder die durch das Vermischen im zweiten Gefäß entstandene Flüssigkeit kontinuierlich oder intermittierend gerührt wird/werden.

11. Verfahren nach einem der vorhergehenden Ansprüche, wobei die Asche oder der Verkohlungsrückstand aus Klärschlamm durch Vergasung und/oder Pyrolyse oder Verbrennung gewonnene Asche oder gewonnener Verkohlungsrückstand ist.
